# EUROPÄISCHE PATENTSCHRIFT

(11) **EP 2 732 692 B1**
(45) Veröffentlichungstag und Bekanntmachung des Hinweises auf die Patenterteilung: **31.01.2018**
(21) Anmeldenummer: 13190804.8
(22) Anmeldetag: 30.10.2013
(51) Int. Cl.: A01D 90/02, A01D 90/12

(54) **Ladewagen**
Loading wagon
Chariot de chargement

(30) Priorität: 20.11.2012 NL 2009847
(43) Veröffentlichungstag der Anmeldung: 21.05.2014
(73) Patentinhaber: Forage Innovations B.V., 3147 PA Maassluis (NL)
(72) Erfinder: Dreier, Thomas, 89367 Waldstetten (DE)
(74) Vertreter: AGCO Intellectual Property Department

(56) Entgegenhaltungen:
- DE-A1-102006 039 672
- Lely Holding: "Was macht einen Ladewagen zum Silagetransportwagen?", PROFS - Professional forage solutions magazine, Bd. 4, Nr. 1 Juni 2012 (2012-06), Seiten 6-9, XP055104831, Gefunden im Internet: URL:http://www.lely.com/uploads/original/d ocuments/Brochures/Forage_Solutions/PRO_FS /ProFS June 2012 - DE.pdf [gefunden am 2014-02-28]

## Beschreibung

Die Erfindung betrifft einen Ladewagen, dessen Laderaum einen Kratzboden aufweist und an der Vorderseite von einer Stirnwand begrenzt ist, die mit wenigstens einem Hydraulikzylinder verschwenkbar ist, wobei der Hydraulikzylinder einen Drucksensor aufweist. Das vom Ladewagen aufgenommene Futter, wie Gras, Silage oder Heu, wird meist von einer Pick-up einem Förderrotor zugeführt, der das Erntegut ggf. unter Schneiden an einem Schneidwerk in einen nachgeordneten Laderaum presst. Hierbei wird das Erntegut entlang der Stirnwand hochgeschoben, bis so zunächst eine Auftürmung im Laderaum gebildet wird. Dort wird das Futter mit einem Kratzboden schrittweise nach hinten zur Rückwand transportiert, so dass der Förderrotor wieder Erntegut nachpressen kann.

Zum Ansteuern des Kratzbodens wird meist eine sog. Ladeautomatik verwendet, wie z. B. aus der DE 90 13 422 U1 bekannt. Dort ist am oberen Ende der (feststehenden) Stirnwand eine Pressklappe gelenkig angeordnet, die von dem hochgepressten Erntegut beaufschlagt wird und an ihrem hinteren Ende von Druckfedern abgestützt ist. Diese Abstützung arbeitet mit einem elektrischen Steuerschalter zusammen, der einen Schaltkreis aktiviert, um den Antrieb des Kratzbodens einzuschalten. Das Erntegut wird dann solange nach hinten bewegt, bis der Steuerschalter durch Absenken der Pressklappe in die Ausgangsstellung zurückkehrt. Dieser Vorgang wird je nach Größe des Ladewagens z. B. 15 mal wiederholt, bis der Laderaum gefüllt ist.

Die Auslösung des Steuerschalters wird im wesentlichen durch das Gewicht der Pressklappe und die Druckfedern bestimmt, wobei die Auslösekräfte jedoch relativ gering sind. Somit wird der Kratzboden bereits bei geringer Vorpressung des Ernteguts ausgelöst, so dass insgesamt die Befüllung des Laderaums ungenügend bleibt. Eine Erhöhung der Masse der Pressklappe z. B. durch Zusatzgewichte und/oder weitere Federn würde jedoch das Leergewicht erhöhen und zusätzliche Herstellkosten verursachen.

Im Artikel "Was macht einen Ladewagen zum Silagetransportwagen?", veröffentlicht in PROFS - Professional forage solutions magazine, 4. Jahrgang, Ausgabe 1, Juni 2012, S. 6-9, verfügbar im Internet unter URL: http://www.lely.com/uploads/original/documents/Brochures/Forage Solutions/PRO FS/ProFS June 2012 - DE.pdf, abgerufen am 20.10.2014, wird ein Ladewagen namens Lely Tigo XR vorgestellt. Zwei Hydraulikzylinder können die vordere Wand des Laderaums bewegen. In diesen beiden Hydraulikzylindern kann der Druck des Ernteguts gemessen werden. Sobald sich der Kratzboden in Bewegung setzt, kippt die Stirnwand mit der Ladung nach hinten und unterstützt somit den Entladevorgang.

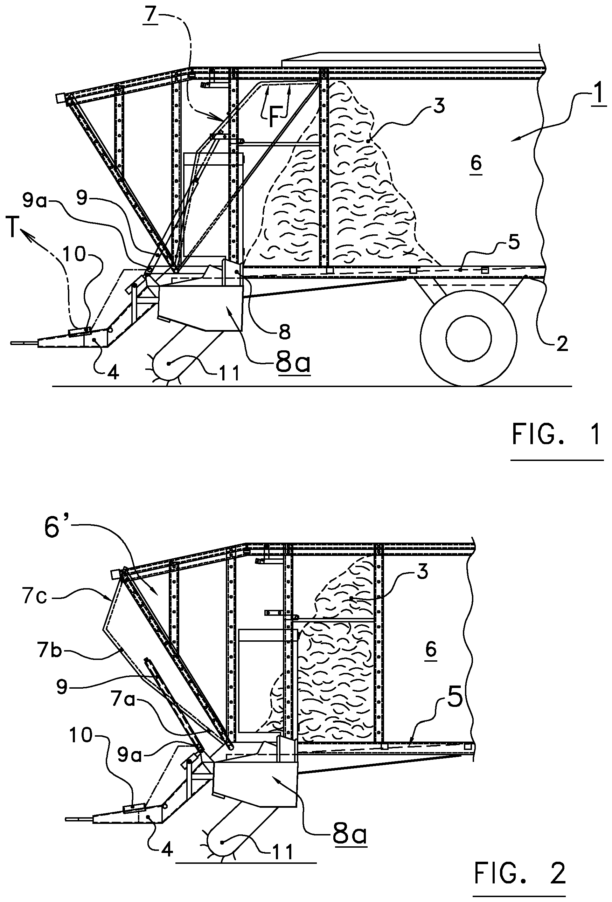

In DE 102006039672 A1 wird ein Ladewagen mit einem Laderaum beschrieben, der von einem Laderaumboden 7 sowie von vier Laderaumwänden 8, 9, 10 und 11 begrenzt ist. Die vordere Laderaumwand 10 ist in ein starres unteres Basisteil 13, ein erstes Klappteil 14 und ein zweites Klappteil 16 unterteilt. Zwei Hydraulikzylinder 20 und 21 können die beiden Klappteile 14 und 16 verschwenken. Der zweite Hydraulikzylinder 21 vermag das zweite Klappteil 16 relativ zum ersten Klappteil 14 zu verschwenken, vgl. Fig. 2 und Fig. 4, und dadurch Erntegut zu verdichten. Eine Ladeautomatik steuert einen Antrieb für den Kratzboden am Laderaumboden 7 abhängig vom gemessenen Druck des Ernteguts im Laderaum an. Hierfür wird der Druck auf das zweite Klappteil 16 gemessen..

Der Erfindung liegt daher die Aufgabe zugrunde, einen Ladewagen zu schaffen, der eine verbesserte Ausnutzung des Ladevolumens bei einfacher Bauweise bietet.

Diese Aufgabe wird durch einen Ladewagen mit den Merkmalen des Anspruches 1 gelöst. Bevorzugte Ausführungsformen sind Gegenstand der Unteransprüche.

Erfindungsgemäß wird vorgeschlagen, dass der Drucksensor mit einem Steuergerät gekoppelt ist, wobei das Steuergerät bei Erreichen eines bestimmten Grenzwerts die Verschwenkung der Stirnwand ansteuert. So kann bei leichtem, trockenem Erntegut (wie Heu) die Stirnwand nach hinten geneigt sein, um den Pressdruck zu erhöhen, während bei feuchtem Erntegut die Stirnwand nach vorne geneigt wird, um einer Vermusung entgegen zu wirken. Das obere Ende der Stirnwand, die die Funktion der vorstehend genannten Pressklappe erfüllt, ist hierbei im Verbund ausgeführt und damit sehr stabil. Somit können sehr hohe Gegenkräfte zum Pressdruck aufgenommen werden. Dies gilt auch für die Druckmessung in der Druckkammer des Hydraulikzylinders mit dem Drucksensor, der über die Abstützkraft der Stirnwand den Pressdruck sehr exakt (und nicht nur einen EIN/AUS-Zustand) erfasst. Somit ist eine feinfühlige Verstellung der beim Pressvorgang wesentlichen Bauteile (Kratzboden und/oder Stirnwand) möglich. Insgesamt lässt sich somit für die jeweilige Futterart die optimale Befüllung (Füllungsgrad) und Ausnutzung des Laderaums erzielen.

Dabei ist die Stirnwand um einen Winkel von z. B. 50° (oder mehr) nach vorne schwenkbar, so dass ein Laderaumgewinn von rund 15% erreichbar ist, ohne die Fahrsicherheit zu gefährden. Der Ausschwenkwinkel kann somit optimal an das Erntegut und/oder die Tragfähigkeit des Traktor-Ladewagen-Gespanns angepasst werden. Zum Entladen wird die Stirnwand bevorzugt mit den Hydraulikzylindern zum Laderaum hin gepresst, um den Entladevorgang zu unterstützen und das Futter zum Kratzboden hin zu fördern.

Die Erfindung wird nachfolgend an Ausführungsbeispielen im Zusammenhang mit den Zeichnungen erläutert. Hierbei zeigen:
Fig. 1 einen Ladewagen in Seitenansicht; und
Fig. 2 die Ausführung nach Fig. 1 mit vorgeklappter Stirnwand.

In Fig. 1 ist der vordere Bereich eines Ladewagens 1 gezeigt, der einen Rahmen 2 aufweist, über dem sich ein Laderaum erstreckt. Der Ladewagen 1 ist über eine Deichsel 4 mit einem nicht näher dargestellten Traktor T gekoppelt. An oder in der Deichsel 4 ist hier ein Steuergerät 10 angedeutet, das bevorzugt per Signalkabel oder auch drahtlos mit einem gleichartigen Steuergerät (z. B. Sender und Anzeige nach CAN-Standard) in der Kabine des Traktors T verbunden ist. Der Laderaum des Ladewagens 1 wird seitlich von Seitenwänden 6 umgrenzt, die vom Rahmen 2 ausgehen, sowie (neben einer nicht dargestellten Rückwand) von einem üblichen Kratzboden 5 und einer vorderen Stirnwand 7. Diese ist an einer horizontalen Achse etwa auf der Höhe des Endes eines Förderkanals 8 in mehrere Stellungen oder bevorzugt stufenlos verschwenkbar, wie nachfolgend näher beschrieben wird. Das Erntegut wird von einer Pick-up 11 aufgenommen und zu einem Förderrotor 8a übergeleitet, der das Futter durch den Förderkanal 8 in den Laderaum des Ladewagens presst bzw. transportiert und hierbei ggf. in bekannter Art noch schneidet. Hierbei wird durch Hochschieben des Futters eine Auftürmung 3 gebildet, die hier nach einem ersten Einschalten oder Verstellen des Kratzbodens 5 dargestellt ist. Somit ist das obere Ende des Förderkanals 8 frei, so dass der Förederrotor 8a das Erntegut entlang der Stirnwand 7 kontinuierlich nachfördern kann. Dabei gelangt das Erntegut an das obere Ende der Stirnwand 7 (Abschnitt 7c in Fig. 2) und wirkt auf dieses mit Kräften F ein. Dies ist erwünscht, um den Pressgrad zu steigern und ggf. bei der Förderung entstehende Hohlräume im Laderaum auszufüllen.

In Fig. 1 befindet sich die Stirnwand 7 in der für Trockenfutter üblichen Position, wobei der untere Abschnitt 7a der Stirnwand 7 etwa vertikal oder in Fortführung des Förderkanals 8 aufrechtstehend ist. Das hochgeförderte Futter gelangt entlang dem etwas nach hinten geneigten Abschnitt 7b zu dem stark nach hinten geneigten Abschnitt 7c der Stirnwand 7 und beaufschlagt diesen mit den Kräften F, entsprechend dem Pressdruck. Mit zunehmender Füllung des Laderaums kann die Stirnwand 7 unter Betätigung (Zusammenziehen) wenigstens eines Hydraulikzylinders 9 (oder einer ähnlichen Betätigungsvorrichtung) in Richtung zum Traktor T hin verschwenkt werden, so dass sich eine Vergrößerung des Laderaums von z. B. 3 m³ oder mehr ergibt. Die Stirnwand 7 kann auch noch weiter abgesenkt werden, soweit die Kolbenstangen- bzw. Zylinderlänge des Hydraulikzylinders 9 dies erlaubt. So sind Schwenkwinkel von etwa 60° relativ zur vertikalen Grundposition (mit voll ausgefahrener Kolbenstange wie in Fig. 1) und eine Laderaumvergrößerung von z. B. 6 m³ möglich. Bei den nach vorne geschwenkten Positionen (Fig. 2) kann mit der Schwenkbewegung der Stirnwand 7 eine Verlängerung 6' der Seitenwand 6 mit nach vorne gezogen werden, damit keine Lücke in der Umgrenzung des Laderaums entsteht.

Die Verlängerung 6' kann auch feststehend sein, wie in Fig. 1 und 2 gezeigt, wobei als obere Abdeckung der Laderaumvergrößerung meist einfache, ausziehbare Kunststoffseile ausreichen.

Die Verstellung der Stirnwand 7 wird über wenigstens einen Hydraulikzylinder 9 über das Steuergerät 10 und vorzugsweise elektro-hydraulische Schaltventile (ebenso für den Kratzboden 5 vorgesehen) gesteuert. Der Hydraulikzylinder 9 ist bevorzugt am Anlenkbereich der Deichsel 4 abgestützt und so in stabiler Weise gelagert, um auch große Lasten bewegen zu können, also das in der Laderaumvergrößerung aufliegende Erntegut
zum Kratzboden 5 hin zu drücken, aber auch die am Abschnitt 7c wirkenden Kräfte F beim Pressen des Erntegutes stabil abzustützen. Hierbei ist in oder an der Druckkammer des Hydraulikzylinders 9 ein Drucksensor 9a vorgesehen bzw. angekoppelt, um diese an der Stirnwand 7 wirkenden Kräfte F zumindest qualitativ zu erfassen.

Wird hierbei durch den Drucksensor 9a (z. B. in der Bauart als Dehnmessstreifen) ein höherer Druckwert (Erreichen eines z. B. im Steuergerät 10 abgespeicherten Grenzwertes) in oder an dem Hydraulikzylinder 9 gemessen (entsprechend hohen Kräften F und damit hohen Vorpresskräften) wird über das Steuergerät 10 der Kratzboden 5 betätigt. Der vorbestimmte Grenzwert kann im Steuergerät 10 verändert werden, z. B. in Anpassung an das zu ladende Futter. Der Grenzwert kann aber auch von der Kabine des Traktors T aus während der Fahrt angepasst werden. Bei nahezu befüllten Ladewagen 1 (vgl. Fig. 2) kann die Stirnwand 7 aus der Position in Fig. 1 schrittweise oder stufenlos nach vorne zum Traktor T hin abgesenkt werden. Schließlich ist der Hydraulikzylinder 9 in seiner kürzesten Stellung, wobei der maximale Pressdruck abnimmt, da der Abschnitt 7c aus der nahezu horizontalen Lage in Fig. 1 allmählich in eine mehr und mehr aufgerichtete Position übergeführt wird.

## Patentansprüche

1. Ladewagen, dessen Laderaum einen Kratzboden (5) aufweist und an der Vorderseite von einer Stirnwand (7) begrenzt ist, die mit wenigstens einem Hydraulikzylinder (9) verschwenkbar ist, wobei der Hydraulikzylinder (9) einen Drucksensor (9a) aufweist, **dadurch gekennzeichnet, dass**
der Drucksensor (9a) mit einem Steuergerät (10) gekoppelt ist, wobei das Steuergerät (10) bei Erreichen eines bestimmten Grenzwerts die Verschwenkung der Stirnwand (7) ansteuert.

2. Ladewagen nach Anspruch 1, **dadurch gekennzeichnet, dass** das Steuergerät (10) oder Elemente davon in einer Kabine eines Traktors angeordnet ist.

3. Ladewagen nach einem der Ansprüche 1 oder 2, **dadurch gekennzeichnet, dass** der Laderaum seitlich von Seitenwänden (6) umgrenzt wird, wobei die Stirnwand (7) muldenartig ausgeformt ist und wobei der mittlere Bereich weiter nach vorne ragt als die Seitenwände (6).

4. Ladewagen nach einem der Ansprüche 1 bis 3, **dadurch gekennzeichnet, dass** an der Stirnwand (7) zwei Hydraulikzylinder (9) angelenkt sind, insbesondere im seitlichen, äußeren Randbereich.

5. Ladewagen nach einem der Ansprüche 1 bis 4, **dadurch gekennzeichnet, dass** der bestimmte Grenzwert zur Ansteuerung des Verschwenkens der Stirnwand (7) am Steuergerät (10) manuell veränderbar ist.

6. Ladewagen nach einem der Ansprüche 1 bis 5, **dadurch gekennzeichnet, dass** die Stirnwand (7) um eine Horizontalachse über einem Förderrotor (8a) verschwenkbar ist.

## Claims

1. Loading wagon, the loading space of which comprises a floor conveyor (5) and is separated at the front by a bulkhead (7), which is pivotable with at least a hydraulic cylinder (9), wherein the hydraulic cylinder (9) comprises a pressure sensor (9a), **characterised in that** the pressure sensor (9) is coupled with a control device (10), wherein the control device (10) actuates the movement of the bulkhead (7) when a pre-determined limit value is reached.

2. Loading wagon according to Claim 1, **characterised in that** the control device (10) or elements of it are arranged in a cabin of a tractor.

3. Loading wagon according to any one of Claims 1 or 2, **characterised in that** the loading space is surrounded by side walls (6) on the sides, wherein the bulkhead (7) is trough-shaped and wherein the central area extends further than the side walls (6).

4. Loading wagon according to any one of Claims 1 to 3, **characterised in that** the two hydraulic cylinders are hinged to the bulkhead (7), in particular in the lateral, outer edge area.

5. Loading wagon according to any one of Claims 1 to 4, **characterised in that** the predetermined value limit for controlling the movement of the bulkhead (7) can be changed manually on the control device (10).

6. Loading wagon according to any one of Claims 1 to 5, **characterised in that** the bulkhead (7) is pivotable about a horizontal axis by means of a feed rotor (8a).

## Revendications

1. Chariot chargeur dont l'espace de chargement présente un fond mouvant (5) et étant délimité à l'avant par une paroi frontale (7) qui peut pivoter avec au moins un cylindre hydraulique (9), le cylindre hydraulique (9) présentant un capteur de pression (9a), **caractérisé en ce que** le capteur de pression (9a) est couplé à un appareil de commande (10), l'appareil de commande (10) pilotant l'inclinaison du fond mouvant (7) lorsqu'une valeur limite déterminée est atteinte.

2. Chariot chargeur selon la revendication 1, **caractérisé en ce que** l'appareil de commande (10), ou certains de ses éléments, sont agencés dans la cabine d'un tracteur.

3. Chariot chargeur selon l'une des revendications 1 ou 2, **caractérisé en ce que** l'espace de chargement est délimité latéralement par des parois latérales (6), la paroi frontale (7) étant conçue en forme d'auge et la zone centrale faisant saillie plus en avant que les parois latérales (6).

4. Chariot chargeur selon l'une des revendications 1 à 3, **caractérisé en ce que** deux cylindres hydrauliques (9) sont articulés sur la paroi frontale (7), en particulier dans la zone de bordure extérieure latérale.

5. Chariot chargeur selon l'une des revendications 1 à 4, **caractérisé en ce que** la valeur limite déterminée est susceptible d'être modifiée manuellement sur l'appareil de commande (10) pour le pilotage du fond mouvant (5).

6. Chariot chargeur selon l'une des revendications 1 à 5, **caractérisé en ce que** la paroi frontale (7) est susceptible de pivoter autour d'un axe horizontal au-dessus d'un rotor d'alimentation (8a).
